# EUROPÄISCHE PATENTSCHRIFT

(11) **EP 1 918 692 B1**
(45) Veröffentlichungstag und Bekanntmachung des Hinweises auf die Patenterteilung: **05.01.2011**
(21) Anmeldenummer: 07020177.7
(22) Anmeldetag: 16.10.2007
(51) Int. Cl.: G01N 21/23, G06T 7/00

(54) **Verfahren und Computerprogrammprodukt zur Bestimmung von Anisotropieparametern**
Method and computer program product for defining anisotropy parameters
Procédé produit de programme informatique destinés à la détermination de paramètres d'anisotropie

(30) Priorität: 31.10.2006 DE 102006051872
(43) Veröffentlichungstag der Anmeldung: 07.05.2008
(73) Patentinhaber: Octax Microscience GmbH, 84079 Bruckberg (DE)
(72) Erfinder: Schimming, Thomas, Dr., 85354 Freising (DE); Rink, Klaus, Dr., 84032 Altdorf (DE)

(56) Entgegenhaltungen:
- EP-A- 1 783 204
- PELLETIER CORY ET AL: "Noninvasive polarized light microscopy quantitatively distinguishes the multilaminar structure of the zona pellucida of living human eggs and embryos" FERTILITY AND STERILITY, ELSEVIER SCIENCE INC, NEW YORK, NY, US, Bd. 81, Nr. SUPPL 1, März 2004 (2004-03), Seiten 850-856, XP002455299 ISSN: 0015-0282
- KEEFE D ET AL: "Polarized light microscopy and digital image processing identify a multilaminar structure of the hamster zona pellucida" HUMAN REPRODUCTION, IRL PRESS, OXFORD, GB, Bd. 12, Nr. 6, 1997, Seiten 1250-1252, XP007903995 ISSN: 0268-1161
- SHEN Y ET AL: "High magnitude of light retardation by the zona pellucida is associated withconception cycles" HUMAN REPRODUCTION, IRL PRESS, OXFORD, GB, Bd. 20, Nr. 6, 25. Februar 2005 (2005-02-25), Seiten 1596-1606, XP007903996 ISSN: 0268-1161
- KLOSE R: "Neue M glichkeiten zur Beurteilung menschlicher Eizellen durch das Polarisationsmikroskopische System OCTAX ICSI GUARDTM" JOURNAL FÜR REPRODUKTIONSMEDIZIN UND ENDOKRINOLOGIE, Bd. 3, Nr. 5, Oktober 2006 (2006-10), Seiten 356-358, XP007904005
- YANG F, JIANG T: "Cell image segmentation with kernel-based dynamic clustering and an ellipsoidal cell shape model" JOURNAL OF BIOMEDICAL INFORMATICS, vol. 34, 6 June 2001 (2001-06-06), pages 67-73, XP007912365

## Beschreibung

Die Erfindung betrifft ein Verfahren und eine Anordnung zur Bestimmung von Anisotropieparametem. Insbesondere betrifft die vorliegende Erfindung ein Verfahren und eine Anordnung zur Bestimmung von Parametern, welche Doppelbrechungen beschreiben, die von anisotropen Bereichen mikroskopisch kleiner Objekte, beispielsweise biologischer Zellen, hervorgerufen werden.

Die Erfassung und quantitative Analyse von Anisotropien mikroskopisch kleiner Objekte ist unter anderem auf dem Gebiet der Mikrobiologie von Interesse, wobei die Zellhülle (Zona pellucida) insbesondere von Eizellen durch die starke Orientierung der Moleküle eine optisch erfassbare Anisotropie aufweist, die sich in Form einer Doppelbrechungseigenschaft manifestiert.

Optische Anisotropien, genauer gesagt die durch sie hervorgerufene Doppelbrechung, werden mit polarisationsmikroskopischen Verfahren erfaßt, bei denen Licht in verschiedenen Polarisationszuständen das Objekt durchleuchtet und die sich ergebenden Abbilder in geeigneter Weise erfasst, ausgewertet, und der Betrag der Doppelbrechung durch Berechnung ermittelt werden.

Die Polarisationsmikroskopie und ihre mikrobiologische Anwendung sind seit langem bekannt. Neben der klassischen Methode, bei der die Veränderung des optischen Strahlengangs mit Hilfe mechanischer Veränderung (meist Rotation) von geeigneten Elementen, entweder von Hand oder durch Motoren angetrieben, erreicht wird, sind seit neuerem auch auf mechanische Bewegung verzichtende Systeme, unter der Verwendung von Flüssigkristall-Zellen mit spannungsabhängig variabler optischer Verzögerung (wie in US Patentschrift 5,521,705 beschrieben) oder variabler Rotation der Polarisationsebene (wie in der Offenlegungsschrift DE 10 2005 005 757 beschrieben) im Einsatz.

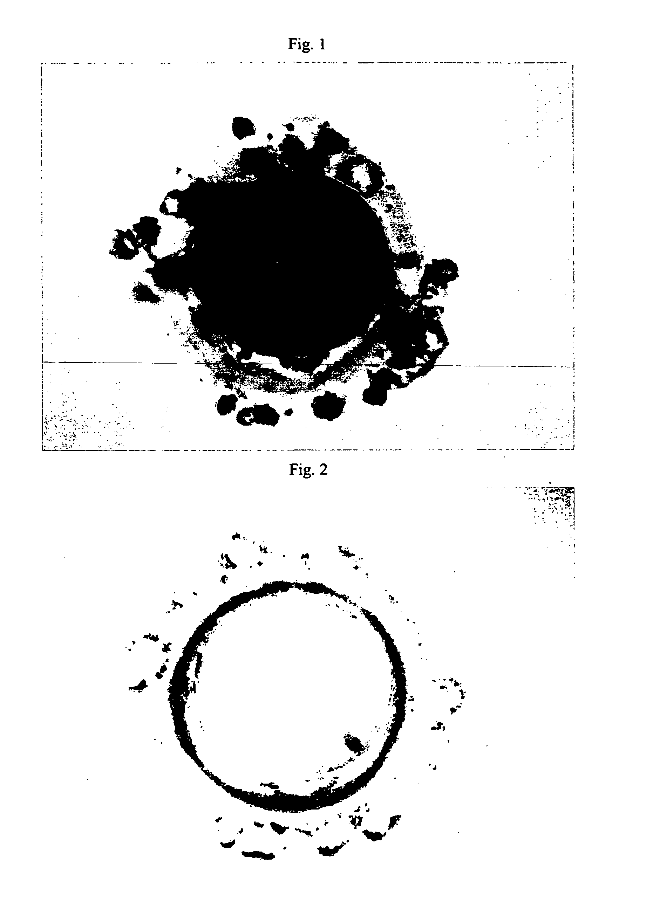

Ergebnis dieser der Verfahren / Systeme zur Erfassung der Anisotropie ist üblicherweise ein durch Berechnung entstandenes Bild, im folgenden Analysebild genannt. Die Bildpunkte eines derartigen Analysebildes enthalten in Analogie zum klassischen Mikroskopbild statt der in Fig. 1 beispielhaft dargestellten Helligkeitsinformation in jedem Bildpunkt eine Information, wie stark der Doppelbrechungseffekt an dieser Stelle ist. Eine vollständige Charakterisierung der Doppelbrechung erfolgt durch ihren Orientierungswinkel in der Bildebene sowie durch ihren Betrag, meist in Nanometer gemessen. Je nach eingesetztem Analysesystem erhält man ein Bild mit der Betragsinformation der Doppelbrechung entweder absolut (geeicht) oder proportional, wobei der Proportionalitätsfaktor, der für eine geeichte Absolutmessung erforderlich wäre, unbekannt bleibt, sowie ein weiteres Bild mit der Winkelinformation (bei Bedarf).

In der Praxis werden Abbilder von Zellen, insbesondere Eizellen, mit einem derartigen System erzeugt, wobei der Betrag der Doppelbrechung durch Graustufenwerte dargestellt wird (z.B.: hell entspricht geringer Doppelbrechung, dunkel entspricht starker Doppelbrechung). Bei diesem Abbild bemerkt man eine relativ starke Doppelbrechung in der inneren Schicht der Zona pellucida, deren Stärke, Uniformität und Intensitätsprofil in wissenschaftlichen Studien, beispielsweise im Artikel "High magnitude of light retardation by the zona pellucida is associated with conception cycle" von Shen et al in Hum Reprod 20(6), Seiten 1596-1606, mit der Qualität bzw. dem Entwicklungspotential der Zelle in Verbindung gebracht wurde. Ein Beispiel für ein solches Analysebild ist in Fig. 2 gegeben.

Der derzeit bekannte Ansatz zur Vermessung der Doppelbrechung insbesondere im Bereich dieser Zona pellucida beruht auf manuellen Platzierung von Maßlinien auf dem Analysebild, entlang derer eine Extraktion eines Intensitätsprofils erfolgt. Aus einem solchen Intensitätsprofil lassen sich relevante Informationen wie Maximum des Betrags der Doppelbrechung und Breite des doppelbrechenden Bereiches bestimmen, wie im Zusammenhang mit einem Ausführungsbeispiel der vorliegenden Erfindung weiter unten im Detail erläutert. Die genaue Auswertung eines derartigen Intensitätsprofils erfolgt dabei bisher manuell und oft auf der Basis von Schwellwerten, die wegen der Meßunsicherheiten oft nicht die nötige Robustheit aufweisen. Wegen des manuellen Vorgehens ist die Messung überdies meist auf die Auswertung weniger (meist dreier, subjektiv ausgewählter) derartiger Intensitätsprofile begrenzt, obwohl die Zielsetzung die Charakterisierung der Zona pellucida in ihrer Gesamtheit ist.

Es ist daher eine Aufgabe der vorliegenden Erfindung, ein Verfahren, eine Anordnung und ein Computerprogrammprodukt zur Bestimmung von Anisotropieparametern mikroskopisch kleiner biologischen Zellen anzugeben, welche die systematische und objektive Erfassung der relevanten Parameter der Doppelbrechungseigenschaften insbesondere der Zona pellucida in robuster und benutzerunabhängiger Art und Weise erlauben.

Diese Aufgabe wird durch ein Verfahren zur Bestimmung von statistischen Kenngrößen der Doppelbrechungsverteilung eines Abbilds einer biologischen Zelle, umfassend die folgenden Schritte:
- Erzeugen eines Analysebilds, welches ein zweidimensionales Abbild der Intensitätsinformationen der Doppelbrechung einer biologischen Zelle enthält;
- Ermitteln von Parametern, die eine Ellipse beschreiben, welche näherungsweise den Verlauf der Intensitätsmaxima der Doppelbrechung einer Zellhülle im Analysebild wiedergibt;
- Bestimmen einer Anzahl N1 von Punkten auf der Ellipsenlinie;
- Bestimmen einer Meßlinie für jeden der Punkte auf der Ellipsenlinie, welche die Ellipsenlinie in diesem Punkt schneidet und deren Länge größer oder gleich der Breite der Zellhülle beim jeweiligen Punkt ist.
- Bestimmen einer Anzahl von Meßpunkten auf jeder der N1 Meßlinien;
- Ermitteln einer Doppelbrechungsintensität für jeden der Meßpunkte; und
- Berechnen statistischer Kenngrößen der Doppelbrechungsverteilung aus den ermittelten Doppelbrechungsintensitäten.

Im folgenden werden Ausführungsbeispiele der Erfindung anhand von 5 Zeichnungen näher erläutert. Es zeigen:
Fig. 1 ein Helligkeitsbild einer mikroskopierten Zelle;
Fig. 2 ein Analysebild einer mikroskopierten Zelle, bei dem jeder Bildpunkt eine Information enthält, wie stark der Doppelbrechungseffekt an dieser Stelle ist;
Fig. 3 beispielhafte Anordnung von Meßpunkten entlang einer Meßlinie;
Fig. 4 ein Analysebild, welches mit Meßpunkten überlagert ist; und
Fig. 5 ein Intensitätsprofil entlang einer Meßlinie, umfassend eine Auswahl interessanter Profil-Kenngrößen.

In Übereinstimmung mit einem ersten Aspekt der Erfindung wird eine automatische Parameterextraktion vorgesehen, die mehrere Schritte umfaßt. Ausgangspunkt ist das bereits erläuterte Analysebild, das normalerweise überwiegend von einem Ring dominiert wird, der die Doppelbrechungseigenschaften der Zellhülle bzw. Zona pellucida darstellt. Dieses Analysebild kann zunächst geeignet gefiltert werden, beispielsweise mittels eines Tiefpaßfilters, um kleine Störungen zu unterdrücken. Alternativ oder zusätzlich kann das Analysebild mit der korrespondierenden Helligkeitsinformation verknüpft werden, um Störungen der dominanten Ringstruktur soweit wie möglich zu unterdrücken.

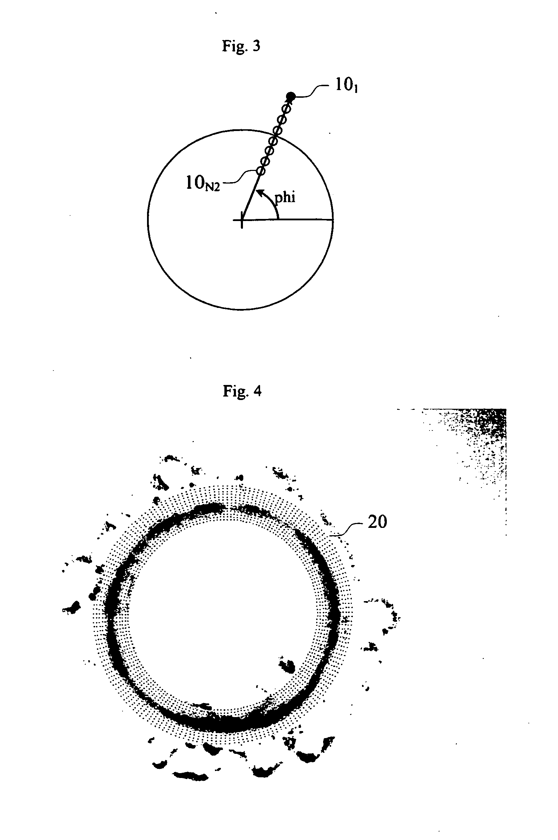

Im resultierenden Bild werden, unter der Annahme, daß sich die Lage der Intensitätsmaxima auf dem Ring näherungsweise durch einen Kreis oder eine Ellipse beschreiben läßt, mit Hilfe von dem Fachmann wohlbekannten Standardverfahren der Bildanalyse die den Kreis bzw. die Ellipse beschreibenden Parameter ermittelt, beispielsweise Mittelpunkt und Radius des Kreises bzw. Mittelpunkt, Orientierungswinkel der großen Halbachse sowie die Längen der beiden Halbachsen der Ellipse. Mit diesem Kreis bzw. dieser Ellipse ist nun die Lage der interessanten Messungen bzw. Intensitätsprofile ausreichend charakterisiert. Auf diesem Kreis bzw. dieser Ellipse wird jeweils ein Punkt, beschrieben durch einen Winkelparameter relativ zur Horizontalen, ausgewählt, und durch diesen Punkt wird eine Meßlinie gelegt, welche vorzugsweise senkrecht oder näherungsweise senkrecht zur Kreis- bzw. Ellipsenlinie verläuft, dargestellt in Fig. 3 als Menge von Meßpunkten 10₁..10_{N2}. Um die Objektivität zu gewährleisten, wird eine große Anzahl N1 solcher Meßlinien erzeugt. Die Länge dieser Meßlinien ist dabei vorzugsweise konstant, kann aber auch variieren. Bei menschlichen Eizellen ist beispielsweise eine relative Länge der Meßlinie bezogen auf den Kreisradius von 10-40% ausreichend. Allgemein wird die Länge der Meßlinie so gewählt, daß die Meßlinie die gesamte Zona pellucida mit Sicherheit überdeckt.

Die N1 Meßlinien können zum Beispiel auf der Kreis- bzw. Ellipsenlinie verteilt werden, indem der Winkelparameter phi in kleinen Schritten von 0 bis 360° variiert wird. Zu bevorzugen sind dabei uniforme Anordnungen, entweder durch uniforme Winkelschritte oder durch uniforme Abstände der entsprechenden Punkte auf dem Kreis bzw. der Ellipse, wobei auch durch Einschränkung des Wertebereiches nur ein Sektor in die Betrachtung einbezogen werden kann.

Auf jeder Meßlinie wird eine gewisse Anzahl von Meßpunkten festgelegt, wobei vorzugsweise für jede Meßlinie eine feste Anzahl N2 von äquidistanten Meßpunkten festgelegt wird. In einem alternativen Ausführungsbeispiel kann vorgesehen werden, die Verteilung der Meßpunkte am Intensitätsmaximum enger zu wählen und mit zunehmendem Abstand vom Intensitätsmaximum zu vergrößern. Jeder Meßpunkt wird damit einerseits durch seinen Abstand von der Kreislinie, andererseits durch den der Meßlinie zugeordneten Winkel phi charakterisiert. Da beide Parameter einer diskreten Aufteilung folgen, ergibt sich damit ein Kreisring- (bzw. Ellipsenring-) förmiges Meßgitter 20, auf dem die interessanten Meßpunkte verteilt sind. Dies ist in Fig. 4 beispielhaft dargestellt. Dieses Meßgitter 20 kann in ein Rechteckgitter mit quadratischen Gitterzellen transformiert werden. Die Extraktion der relevanten Meßwerte erfolgt im bevorzugten Ausführungsbeispiel dementsprechend durch Interpolation im Analysebild an allen N1×N2 Meßpunkten. Die Gesamtheit der Meßwerte können nun als N1 Intensitätsprofile von je N2 Punkten aufgefaßt werden, und die Auswertung dieser Intensitätsprofile kann analog der bekannten Methoden erfolgen.

Für eine robuste und objektive Erfassung sind dabei Fälle besonders interessant, bei denen insbesondere N1, aber auch N2 hoch gewählt werden. Der dabei entstehende zusätzliche Rechenaufwand ist mit moderner Rechentechnik mühelos zu beherrschen. Dabei sollten N1 und N2 so hoch wie möglich gewählt werden, ohne dabei jedoch eine Auflösung des Meßgitters über der Auflösung des Analysebildes zu erhalten. In der Praxis haben sich dabei für eine Bildauflösung von 640x480 Bildpunkten die Parameter N1=180 (d.h. Winkelschritte von 2°) und N2 ca. 20 bewährt. Eine zu hohe Wahl von N1 und N2 führt nicht zu weiterem Informationsgewinn, da die zugrundeliegende Interpolation dann keine neuen Daten mehr zum Vorschein bringt. In einem Ausführungsbeispiel kann mit N2=1 eine vereinfachte Berechnung durchgerührt werden, beispielsweise um eine Vorschauberechnung durchzuführen oder die Bearbeitungszeit zu minimieren.

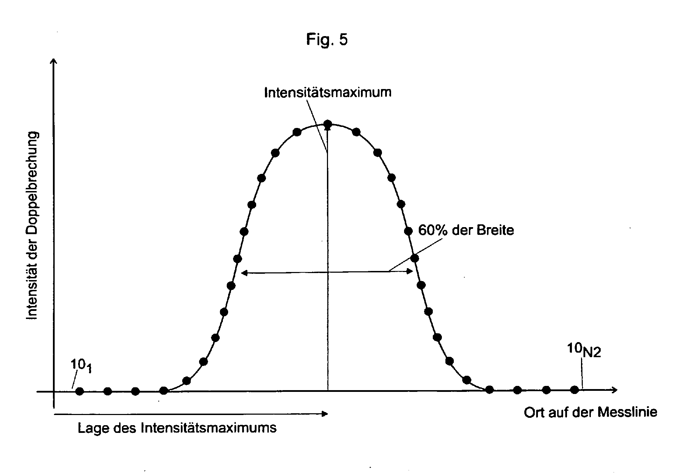

Die automatische Auswertung dieser Intensitätsprofile erfolgt nunmehr bevorzugt dadurch, daß in jedem dieser N1 Profile relevante beschreibende Größen (oder Profil-Kenngrößen) extrahiert werden, die das entsprechende Profil möglichst detailliert, aber gleichzeitig robust in Bezug auf Meßunsicherheiten, beschreiben. Fig. 5 zeigt beispielhaft ein Intensitätsprofil entlang einer ausgewählten Meßlinie. Dabei stehen robuste statistische Profil-Kenngrößen wie etwa die 60%-Breite im Vordergrund, um Lage und Betrag von Maxima, Breite usw. zu charakterisieren. Pro Intensitätsprofil fallen damit eine gewisse (kleine) Anzahl von Kenngrößen an, die im weiteren noch statistisch in Bezug auf die N1 Messungen zu den gesamten statistischen Kenngrößen zusammengefaßt werden, um die Datenmenge überschaubar zu gestalten. Insbesondere stehen dabei der Mittelwert und die Varianz jeder dieser Kenngrößen über die N1 Messungen im Vordergrund.

Weiterhin kann der Ausschluß eines Teils der N1 Intensitätsprofile aufgrund eines Kriteriums von Vorteil sein, das sich entweder aus den Kenngrößen des individuellen auszuschließenden Profils ableitet, oder über die Randbedingung, daß sich die Kenngrößen aufeinanderfolgender Profile nicht zu sehr verändern sollen. Durch eine derartige Selektion ist ein automatischer Ausschluß von Meßpunkten möglich, an denen sonst punktuelle Defekte oder störende Fremdpartikel den gebildeten Mittelwert sowie die Varianz verfälschen würden.

Ergebnis der automatischen Auswertung ist damit eine überschaubare Anzahl von Kenngrößen beschrieben durch Mittelwert und Varianz entlang des ringförmigen Abbilds. Auf Basis dieser Kenngrößen kann dann eine Einschätzung der Zellqualität bzw. des Zellentwicklungspotentials erfolgen, wobei die genaue Auswahl der Kenngrößen, die für diese Einschätzung herangezogen werden, Gegenstand aktueller wissenschaftlicher Studien ist. Zum jetztigen Zeitpunkt deutet sich dabei ein signifikanter Einfluß der Kenngrößen "Intensitätsmaximum der Doppelbrechung" mit Mittelwert und Varianz, sowie "Breite des doppelbrechenden Bereiches", beispielsweise 60%-Breite, mit Mittelwert und Varianz an. Diese Kenngrößen werden vorzugsweise durch eine geeignete Formel zu einem Score verknüpft, der dann bezüglich eines Schwellwertes die Entscheidung in für die gewählte Anwendung "geeignete" und "weniger geeignete" Zellen ermöglicht, und darüber hinaus eine quantitative Abschätzung über den Grad der Unsicherheit einer solchen Entscheidung ermöglicht.

Wenn das zur Erfassung des Analysebildes verwendete System einen kontinuierlichen (Video-) Betrieb zuläßt und die Analyse nicht nur in Form eines repräsentativen Einzelbildes liefert, ist wahlweise auch ein kontinuierlicher Betrieb der automatischen Messung möglich und wünschenswert. Dabei ist vorteilhaft eine direkte Rückkopplung der Meßergebnisse und des Erfolgs der technischen Zwischenschritte, insbesondere der automatisierten Identifikation des charakteristischen Kreises bzw. der Ellipse an den Benutzer möglich. Der Benutzer kann direkt durch Handhabung des Mikroskopes (anstelle der Beeinflussung der automatischen Messung) störende Objekte erkennen und entfernen, indem der erkannte Kreis bzw. die Ellipse in Echtzeit in einem gemeinsamen Bild zusammen mit dem Analysebild visuell dargestellt wird. Auch ist wahlweise die Darstellung des in ein rechteckiges Abbild transformierten Ringes möglich, um dem Benutzer zusätzliche Information über die in die Auswertung einbezogenen Daten zu geben. Außerdem ist bei einer kontinuierlichen Anzeige der berechneten statistischen Kenngrößen (in Mittelwert und Varianz) eine direkte Abschätzung der zu erwartenden Genauigkeit dieser Messwerte anhand der beobachteten zeitlichen Fluktuation möglich. Schließlich kann ein geeignet gebildeter Score zusammen mit der zugehörigen Schwellwertentscheidung direkt mit im Bild angezeigt werden und ermöglicht einen Einsatz der automatischen Kenngrößenbestimmung völlig ohne zusätzliche Bedieneraktionen, was insbesondere im Vergleich zur manuellen Platzierung einer geringen Anzahl von Meßlinien auf einem Analyse-Einzelbild zu einer enormen Zeitersparnis führt, die mit einem sprunghaften Anstieg der Praxistauglichkeit einher geht, da der Zeitfaktor hier von essentieller Bedeutung ist.

Im kontinuierlichen Betrieb kann ferner wahlweise bei ausreichend kurzer zeitlicher Abfolge der Einzelbilder eine gewisse Kontinuität der Parameter des gefundenen Kreises bzw. der Ellipse unterstellt werden, die dann zur Auffindung des neuen Kreises bzw. der neuen Ellipse hilfreich ist. Zum Beispiel wird bei kurzer zeitlicher Abfolge der Einzelbilder der Mittelpunkt des Kreises bzw. der Ellipse oft nur wenig variieren, und die Größe des Kreises bzw. der Ellipse werden bei einem analysierten Zelltyp nur in sehr engen Grenzen schwanken.

## Patentansprüche

1. Verfahren zur Bestimmung von statistischen Kenngrößen der Doppelbrechungsverteilung eines Abbilds einer biologischen Zelle, umfassend die folgenden Schritte:
- Erzeugen eines Analysebilds, welches ein zweidimensionales Abbild der Intensitätsinformationen der Doppelbrechung einer biologischen Zelle enthält;
- Ermitteln von Parametern, die eine Ellipse beschreiben, welche näherungsweise den Verlauf der Intensitätsmaxima der Doppelbrechung einer Zellhülle im Analysebild wiedergibt;
- Bestimmen einer Anzahl N1 von Punkten auf der Ellipsenlinie;
- Bestimmen einer Meßlinie für jeden der Punkte auf der Ellipsenlinie, welche die Ellipsenlinie in diesem Punkt schneidet und deren Länge größer oder gleich der Breite der Zellhülle beim jeweiligen Punkt ist;
- Bestimmen einer Anzahl von Meßpunkten (10₁...10_{N2}) auf jeder der N1 Meßlinien;
- Ermitteln einer Doppelbrechungsintensität für jeden der Meßpunkte; und
- Berechnen statistischer Kenngrößen der Doppelbrechungsverteilung aus den ermittelten Doppelbrechungsintensitäten.

2. Verfahren nach Anspruch 1, bei dem die Ellipse näherungsweise durch einen Kreis beschrieben wird.

3. Verfahren nach einem der vorhergehenden Ansprüche, bei dem die Meßlinien näherungsweise senkrecht zur Ellipsenlinie verlaufen.

4. Verfahren nach einem der vorhergehenden Ansprüche, bei dem jede Meßlinie eine gleiche Anzahl N2 von Meßpunkten aufweist.

5. Verfahren nach einem der vorhergehenden Ansprüche, bei dem die Meßpunkte einer Meßlinie äquidistant sind.

6. Verfahren nach einem der vorhergehenden Ansprüche, bei dem die Punkte auf der Ellipsenlinie äquidistant sind.

7. Verfahren nach einem der vorhergehenden Ansprüche, bei dem zunächst für jede der N1 Meßlinien Profil-Kenngrößen berechnet werden und diese anschließend zur Berechnung der statistischen Kenngrößen verwendet werden.

8. Verfahren nach Anspruch 7, bei für die Berechnung der statistischen Kenngrößen nur bestimmte N1 Meßlinien basierend auf deren Profil-Kenngrößen ausgewählt werden.

9. Verfahren nach einem der vorhergehenden Ansprüche, bei dem das Analysebild zunächst gefiltert wird und anschließend für das Auffinden der den Verlauf der Intensitätsmaxima der Doppelbrechung beschreibenden Ellipse genutzt wird.

10. Verfahren nach einem der vorhergehenden Ansprüche, bei dem das Analysebild zunächst mit korrespondierenden Helligkeitsinformationen verknüpft wird und anschließend für das Auffinden der den Verlauf der Intensitätsmaxima der Doppelbrechung beschreibenden Ellipse genutzt wird.

11. Verfahren zur kontinuierlichen Bestimmung von statistischen Kenngrößen der Doppelbrechungsverteilung eines Abbilds einer biologischen Zelle, umfassend die folgenden Schritte:
- wiederholtes, kontinuierliches Erzeugen eines Analysebilds, welches ein zweidimensionales Abbild der Intensitätsinformationen der Doppelbrechung einer biologischen Zelle enthält; und
- Anwenden des Verfahrens nach einem der Ansprüche 1 bis 10 auf jedes der erzeugten Analysebilder.

12. Verfahren nach Anspruch 11, bei dem die berechneten statistischen Kenngrößen dem Analysebild überlagert kontinuierlich visuell dargestellt werden.

13. Verfahren einem der Ansprüche 11 oder 12, bei dem die Lage eines Teils oder aller Meßpunkte dem Analysebild überlagert kontinuierlich visuell dargestellt wird.

14. Computerprogrammprodukt umfassend maschinenlesbare Anweisungen zur Ausführung des Verfahrens nach einem der Ansprüche 1 bis 13.

## Claims

1. A method for determining statistical parameters of a birefringence distribution of an image of a biological cell, comprising the following steps:
- obtaining an analysis image comprising a two-dimensional image of intensity information of birefringence of a biological cell;
- determining parameters describing an ellipse approximating the curve of intensity maxima of the birefringence of the zona pellucida in said analysis image;
- determining a number N1 of points along the ellipse's circumferential line;
- determining a measurement line for each of the points along the ellipse's circumferential line subtending the ellipse's circumferential line in that point and having a length equal to or greater than the width of the zona pellucida at that point;
- determining a number of measurement points (10₁..10_{N2}) on each of the N1 measurement lines;
- determining the intensity of birefringence for each of the measurement points;
and
- calculating statistical parameters of the birefringence distribution from the determined intensities of birefringence.

2. The method of claim 1, wherein the ellipse is approximated by a circle.

3. The method of any of the preceding claims, wherein the measurement lines are approximately perpendicular to the ellipse's circumferential line.

4. The method of any of the preceding claims, wherein each measurement line comprises an equal number N2 of measurement points.

5. The method of any of the preceding claims, wherein the measurement points of a given measurement line are equidistant.

6. The method of any of the preceding claims, wherein the points along the ellipse's circumferential line are equidistant.

7. The method of any of the preceding claims, wherein for each of the N1 measurement lines profile parameters are calculated which are then used for calculating the statistical parameters.

8. The method of claim 7, wherein a subset of the N1 measurement lines is used for calculating the statistical parameters, wherein the measurement lines are selected for use with the subset based on their profile parameters.

9. The method of any of the preceding claims, wherein the analysis image is first filtered and then used for finding the ellipse describing the curve of intensity maxima of the birefringence.

10. The method of any of the preceding claims, wherein the analysis image is first combined with a corresponding brightness information and then used for finding the ellipse describing the curve of intensity maxima of the birefringence.

11. A method for continuously determining statistical parameters of a birefringence distribution of images of a biological cell, comprising tha following steps:
- continuously obtaining an analysis image comprising a two-dimensional image of intensity information of birefringence of a biological cell; and
- applying the method of any of claims 1 to 10 on each of the obtained analysis images.

12. The method of claim 11, wherein the analysis image is continuously overlaid with the calculated statistical parameters and displayed.

13. The method of claim 11 or 12, wherein the analysis image is continuously overlaid with a position of some or all measurement points and displayed.

14. Computer program product comprising machine-executable instructions for executing the method of any of claims 1 to 13.

## Revendications

1. Procédé pour la détermination de grandeurs de référence statistiques de la distribution de la biréfringence d'une image d'une cellule biologique, comprenant les étapes suivantes :
- production d'une image d'analyse qui comprend une image à deux dimensions des informations d'intensité de la biréfringence d'une cellule biologique ;
- Détermination de paramètres décrivant une ellipse qui restitue approximativement le tracé des maxima d'intensité de biréfringence d'une enveloppe cellulaire dans l'image d'analyse ;
- Détermination d'un nombre N1 de points sur la ligne d'ellipse ;
- Détermination d'une ligne de mesure pour chaque point sur la ligne d'ellipse qui coupe la ligne d'ellipse en ce point et dont la longueur est plus grande ou égale à la largeur de l'enveloppe cellulaire au point correspondant ;
- Détermination d'un nombre de points de mesure (10₁....10_{N2}) sur chacune des N1 lignes de mesure ;
- Détermination d'une intensité de biréfringence pour chacun des points de mesure ; et
- Calcul de grandeurs de référence de la distribution de la biréfringence à partir des intensités de biréfringence déterminées.

2. Procédé selon la revendication 1, dans lequel l'ellipse est décrite approximativement par un cercle.

3. Procédé selon l'une des revendications précédentes, dans lequel la ligne de mesure est située approximativement perpendiculairement à la ligne d'ellipse.

4. Procédé selon l'une des revendications précédentes, dans lequel chaque ligne de mesure comprend le même nombre N2 de points de mesure.

5. Procédé selon l'une des revendications précédentes, dans lequel les points de mesure d'une ligne de mesure sont équidistants.

6. Procédé selon l'une des revendications précédentes, dans lequel les points sur la ligne d'ellipse sont équidistants.

7. Procédé selon l'une des revendications précédentes, dans lequel, dans un premier temps, des grandeurs de référence de profil sont calculées pour chacune des N1 lignes de mesure, et celles-ci sont ensuite utilisées pour le calcul des grandeurs de références statistiques.

8. Procédé selon la revendication 7, dans lequel seulement certaines lignes de mesure N1 basées sur les grandeurs de référence de profil sont sélectionnées pour le calcul des grandeurs de référence statistiques.

9. Procédé selon l'une des revendications précédentes, dans lequel l'image d'analyse est d'abord filtrée, puis est utilisée pour la détermination de l'ellipse décrivant le tracé des maxima d'intensité de la biréfringence.

10. Procédé selon l'une des revendications précédentes, dans lequel l'image d'analyse est d'abord combinée avec des informations de luminosité correspondantes, puis est utilisée pour la détermination de l'ellipse décrivant le tracé des maxima d'intensité de la biréfringence.

11. Procédé pour la détermination continuelle de grandeurs de référence statistiques de la distribution de la biréfringence d'une image d'une cellule biologique, comprenant les étapes suivantes :
- production continuelle, répétée d'une image d'analyse qui comprend une image à deux dimensions des informations d'intensité de la biréfringence d'une cellule biologique ; et
- Utilisation du procédé selon une des revendications 1 à 10 sur chacune des images d'analyse produites.

12. Procédé selon la revendication 11, dans lequel les grandeurs de référence statistiques calculées sont représentées visuellement continuellement superposées à l'image d'analyse.

13. Procédé selon une des revendications 11 ou 12, dans lequel la position d'une partie ou de tous les points de mesure est représentée visuellement continuellement superposée à l'image d'analyse.

14. Programme informatique comprenant des instructions lisibles par machine pour la réalisation du procédé selon une des revendications 1 à 13.
